# EUROPEAN PATENT SPECIFICATION

(11) **EP 4 325 635 B1**
(45) Date of publication and mention of the grant of the patent: **11.03.2026**
(21) Application number: 23796682.5
(22) Date of filing: 14.04.2023
(51) Int. Cl.: H01M 10/6556, H01M 10/6551, H01M 10/6569, H01M 10/647, H01M 10/658, H01M 10/6568, H01M 10/613, H01M 50/143, H01M 50/342, H01M 50/211, A62C 3/16, H01M 10/625, H01M 10/643, H01M 50/213

(54) **BATTERY PACK WITH ENHANCED COOLING PERFORMANCE**
BATTERIEPACK MIT VERBESSERTER KÜHLLEISTUNG
BLOC-BATTERIE À PERFORMANCE DE REFROIDISSEMENT AMÉLIORÉE

(30) Priority: 29.04.2022 KR 20220053370
(43) Date of publication of application: 21.02.2024
(73) Proprietor: LG Energy Solution, Ltd., Seoul 07335 (KR)
(72) Inventor: LEE, Yong Ho, Daejeon 34122 (KR); KONG, Seung Jin, Daejeon 34122 (KR); LEE, Jin Kyu, Daejeon 34122 (KR)
(74) Representative: Plasseraud IP
(86) International application number: PCT/KR2023/005134
(87) International publication number: WO 2023/211033

(56) References cited:
- EP-A1- 3 940 860
- CN-A- 114 223 083
- CN-U- 211 182 306
- KR-A- 20130 078 953
- KR-A- 20220 001 227
- KR-A- 20220 001 227
- KR-B1- 102 272 600
- US-A1- 2014 342 201
- US-A1- 2021 320 337
- US-A1- 2021 328 304

## Description

### [Technical Field]

The present invention relates to a battery pack, and more particularly, to a battery pack that can effectively suppress a thermal propagation phenomenon that is the neighboring secondary batteries continuously overheat when a thermal runaway phenomenon occurs in a secondary battery.

This application claims the benefit of priority based on Korean Patent Application No. 10-2022-0053370, filed on April 29, 2022.

### [Background Art]

Unlike primary batteries, secondary batteries are rechargeable and have been extensively researched and developed recently due to potential for miniaturization and high-capacity applications. With the increasing technological advancements and demand for mobile devices, as well as the growing prominence of electric vehicles and energy storage systems in response to environmental concerns, the demand for secondary batteries as an energy source are rapidly and significantly increasing.

Depending on the shape of the battery case, secondary batteries are classified into coin-shaped batteries, cylindrical batteries, prismatic batteries, and pouch-type batteries. The electrode assembly, which is installed inside the battery case in secondary batteries, is a power generation element capable of charge and discharge. It stacks of a stacked structure of electrodes and separators.

Since secondary batteries are required to be used continuously for a long period of time, it is necessary to effectively control the heat generated during the charging and discharging process. If the secondary battery is not properly cooled, the increase in temperature will cause an increase in current, and the increase in current will cause another increase in temperature, resulting in a feedback chain reaction that will eventually lead to the catastrophic condition of thermal runaway.

In addition, if the secondary batteries are grouped together in the form of modules or packs, the thermal runaway of one secondary battery causes the other secondary batteries in the vicinity to continuously overheat, resulting in the phenomenon of thermal propagation. Furthermore, there is a high risk of fire due to flammable gases emitted from overheated secondary batteries and ignition sources such as heating electrodes, etc., thereby it is necessary to suppress such ignition risk.

### [Related Art Document]

(Patent Document 1) KR 10-2017-0070542 (publication on 22 June 2017)
(Patent Document 2) KR 10-2022-0001227 (publication on 5 January 2022)
(Patent Document 3) US 2021/320337 (publication on 14 October 2021)
(Patent Document 4) EP 3 940 860 (publication on 19 January 2022)
(Patent Document 5) CN 114 223 083 (publication on 22 March 2022)
(Patent Document 6) US 2021/328304 (publication on 21 October 2021)

### [Disclosure]

### [Technical Problem]

The present invention is directed to providing a battery pack that can effectively suppress and prevent the thermal propagation phenomenon due to thermal runaway generated in a secondary battery.

However, the technical problems to be solved by the present invention are not limited to the above-described problem, and other problems not mentioned can be clearly understood by those skilled in the art from the following description of the present invention.

### [Technical Solution]

The present invention relates to a battery pack in one example includes: a pack case; a plurality of batteries contained within the pack case; a heat sink positioned above the plurality of batteries in which coolant is stored; a plurality of supply passages connecting the heat sink and the plurality of batteries, respectively; and the plurality of supply passages is sealed, respectively, by a plurality of plugs which are melted by heat generated in the case of thermal runaway of the batteries.

In the present invention, each of the plurality of batteries includes a case made of metal material and provided with a liquid inlet connecting with one of the plurality of supply passages; a plurality of battery cells contained within the case; and a heat absorbing mass disposed between the plurality of battery cells.

In one embodiment, the heat absorbing mass includes an absorbent material impregnated with a liquid that vaporizes as it absorbs heat generated from the battery cells, and an exterior material containing the absorbent material.

According to an embodiment of the present invention, the exterior material may be a thermally conductive pouch, and the pouch is provided with a vulnerable portion that is broken when an internal pressure of the pouch increases.

Here, the absorbent material may be a super absorbent matrix including super absorbent polymers (SAP) or super absorbent fibers (SAF).

In addition, the plurality of plugs may melt before the vulnerable portion of the pouch is broke, and the liquid inlet may be open toward the heat absorbing mass.

In addition, an insulation material may be disposed between the plurality of batteries.

Meanwhile, according to another embodiment of the present invention, the heat sink may include a first block and a second block separated from each other, the plurality of supply passages may include a first plurality of supply passages connecting the first block and the plurality of batteries, respectively and a second plurality of supply passages connecting the second block and the plurality of batteries, respectively, the plurality of plugs may include a first plurality of plugs sealing the first supply passage, respectively, and a second plurality of plugs sealing the second supply passage, respectively, and the melting point of the first plurality of plugs and the melting point of the second plurality of plugs may be different.

Here, the liquid stored in the first block is water, and the melting point of the first plurality of plugs may be lower than the melting point of the second plurality of plugs.

Moreover, the first plurality of plugs may be melted before the vulnerable portion of the pouch is broken.

Further, the liquid stored in the second block may be water mixed with a substance that reduces the surface tension of the water, or a fire extinguishing agent.

Further, the second plurality of plugs may be melted after the vulnerable portion of the pouch is broken.

In addition, the liquid inlet may include a first liquid inlet connected to the first plurality of supply passages and a second liquid inlet connected to the second plurality of supply passages, and the first liquid inlet is open toward the heat absorbing mass.

### [Advantageous Effects]

According to the battery pack of the present invention with the above configuration, in an environment where there is a large increase in temperature such as rapid charging during normal use, the heat sink arranged on the outside of the battery and the heat absorbing mass inside the battery can quickly absorb and distribute heat to suppress the occurrence of thermal runaway and maintain performance and life without high temperature rise.

In addition, the present invention can suppress the occurrence of thermal runaway by melting the low-melting point plug that seals a coolant stored inside the heat sink in the case of occurrence of overheating in the battery and supplying water to a heat absorbing mass inside the battery case, thereby delaying the fracture of the heat absorbing mass that absorbs the heat of the battery and absorbing the heat of the battery for a longer period of time.

In addition, the battery pack of the present invention can effectively suppress the risk of a fire caused by a high-temperature ignition source by discharging water containing a functional additive when a thermal runaway occurs in the battery when the occurrence of a fire risk is increased.

In addition, the technical effects obtainable through the present invention are not limited to the above effects, and other effects not mentioned will be clearly understood by those skilled in the art from the following description of the present invention.

### [Description of Drawings]

However, the following drawings attached to the present specification illustrate exemplary embodiments of the present invention and serve to further assist understanding of the technical idea of the present invention together with the detailed description of the present invention, which will be described below, so that the present invention should not be construed as being limited to details shown in the accompanying drawings.
FIG. 1 is an exploded perspective view of a battery pack according to one embodiment of the present invention.
FIG. 2 is a cross-sectional view along the "A-A" dissection line of FIG. 1.
FIG. 3 is a diagram illustrating a heat absorbing mass disposed between the battery cells contained within the case.
FIG. 4 is a diagram illustrating the injection of a coolant stored in a heat sink into the battery.
FIG. 5 is a diagram illustrating a heat sink equipped in a battery pack according to another embodiment of the present invention.
FIG. 6 is a drawing illustrating the combined structure of the heat sink of FIG. 5 and the battery.
FIG. 7 is a drawing illustrating a state in which the second plug is melted, and liquid stored in the heat sink is injected into the battery.

### [Best mode]

The present invention may be modified into various forms and may have a variety of embodiments, and, therefore, specific embodiments will be described in detail below.

However, the embodiments are not to be taken in a sense which limits the present invention to the specific embodiments and should be construed to include all modifications, equivalents, or substituents falling within the spirit and technical scope of the present invention.

In the present invention, the terms "comprising," "having," or the like are used to specify that a feature, a number, a step, an operation, a component, an element, or a combination thereof described herein exists, and they do not preclude the presence or addition of one or more other features, numbers, steps, operations, components, elements, or combinations thereof.

In addition, in the present invention, when a portion of a layer, a film, a region, a plate, or the like is described as being "on" another portion, this includes not only a case in which the portion is "directly on" another portion but also a case in which still another portion is present between the portion and another portion. Conversely, when a portion of a layer, a film, a region, a plate, or the like is described as being "under" another portion, this includes not only a case in which the portion is "directly under" another portion but also a case in which still another portion is present between the portion and another portion. In addition, in the present application, as being disposed "on" may include the case of being disposed not only on an upper portion but also on a lower portion.

The present invention relates to a battery pack, and in one example, the battery pack of the present invention includes a pack case, a plurality of batteries contained within the pack case, a heat sink positioned on top of the batteries, wherein coolant is stored, a plurality of supply passages connecting the heat sink and the plurality of batteries, respectively, and a plurality of plugs sealing the plurality of supply passages, respectively, and melting from heat generated by thermal runaway of the batteries.

In one embodiment of the present invention, the battery includes a case that is made of metal material provided with a liquid inlet connected to the supply passages, a plurality of battery cells contained within the case, and a heat absorbing mass disposed between the plurality of battery cells.

The battery pack of the present invention is capable of suppressing the occurrence of thermal runaway in environment with high temperature rise, such as rapid charging in normal use, by rapidly absorbing and dispersing heat from the heat sink disposed outside the battery and the heat absorbing mass inside the battery, and can maintain performance and life without high temperature rise.

In addition, the present invention can suppress the occurrence of thermal runaway by melting the low-melting point plug that seals the coolant stored inside the heat sink in the case of occurrence of overheating in the battery, thereby supplying water to the heat absorbing mass inside the battery case, delaying the rupture of the heat absorbing mass, and absorbing the heat of the battery for a longer period of time.

### [Modes of the Invention]

Hereinafter, some embodiments of the battery pack 10 according to the present invention will be described in detail with reference to the accompanying drawings. For reference, the directions of front, back, up, down, left and right designating relative positions used in the following description are intended to aid in the understanding of the present invention, and refer to the directions shown in the drawings unless otherwise defined.

### [First embodiment]

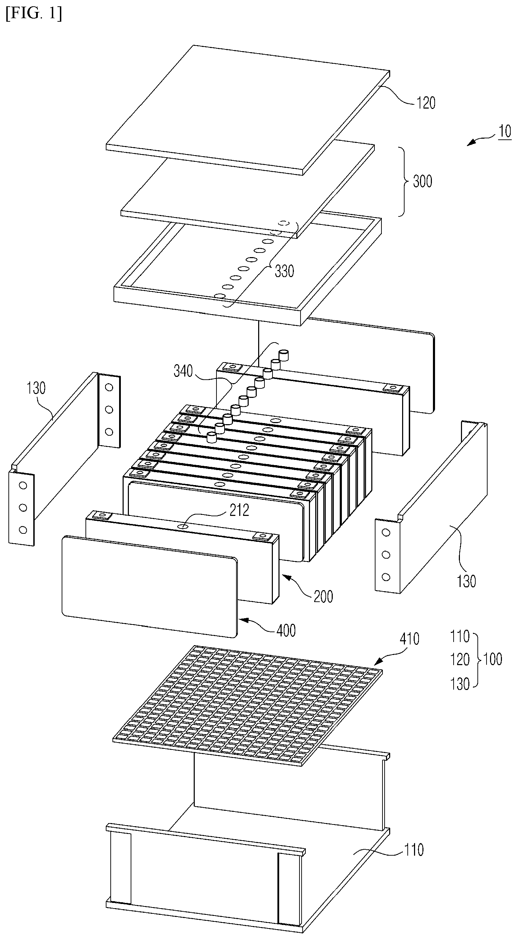

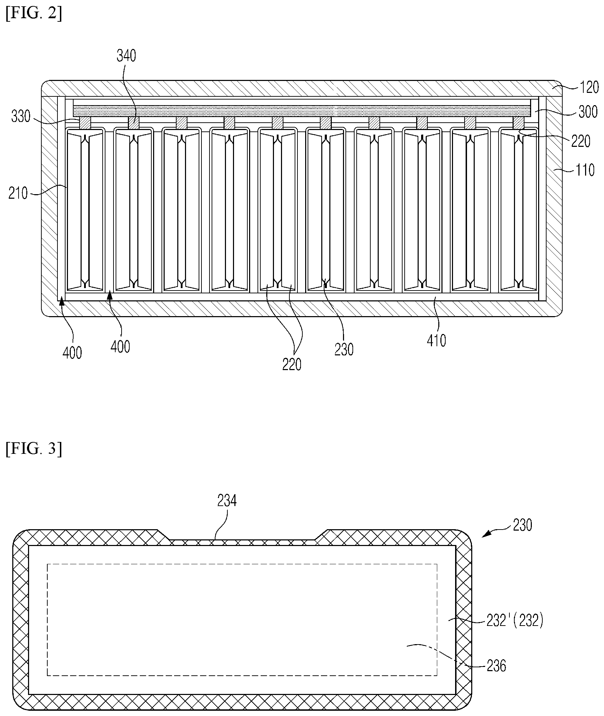

FIG. 1 is an exploded perspective view of a battery pack 10 according to one embodiment of the present invention, and FIG. 2 is a cross-sectional view along the "A-A" dissection line of FIG. 1.

As shown in the drawings, the battery pack 10 of the present invention includes a pack case 100 and a plurality of batteries 200 contained within the pack case 100. The pack case 100 includes a main case 110 having a " U " cross-sectional shape, a top case 120 that couples to an open surface of the main case 110, and a pair of side cases 130. The battery 200 is a prismatic rechargeable battery, and a unidirectional rechargeable battery is exemplified in which the positive and negative electrode terminals are disposed together on the top surface.

Furthermore, the interior of the pack case 100 is provided with a heat sink 300 disposed on the top side of the battery 200. In other words, the heat sink 300 is disposed between the top case 120 of the pack case 100 and the top side of the battery 200. The heat sink 300 has a coolant stored therein to absorb heat generated in the battery 200. For reference, the first embodiment of the present invention is described as a structure in which coolant is stored in the heat sink 300, but it is also possible to implement a structure in which coolant supplied from outside is discharged after circulating through the heat sink 300 in a modified embodiment.

In addition, between the heat sink 300 and the plurality of batteries 200, there are a plurality of supply passages 330 interconnecting them. There are at least as many supply passages 330 as there are batteries 200, thereby every battery 200 is connected to the heat sink 300. The supply passages 330 may be provided as a separate member, such as a plate in which the supply passages 330 are formed, or may be integrally formed in the bottom surface of the heat sink 300 itself. In the first embodiment shown, the supply passage 330 is provided in the form of a hole through the bottom surface of the heat sink 300.

The coolant discharged from the heat sink 300 cools the overheated battery 200, wherein the battery pack 10 of the present invention is configured to inject coolant directly into the battery 200 to increase such cooling effect. For this purpose, the battery 200 includes a case 210 made of metal material having a coolant inlet 212 connected to a supply passage 330, a plurality of battery cells 220 contained within the case 210, and a heat absorbing mass 230 disposed between the plurality of battery cells 220.

Here, the battery cell 220 contained in the case 210 is a pouch cell, and the electrode assembly and electrolyte are sealed within the pouch cell. Therefore, injecting coolant directly into the interior of the case 210 has no effect on the operation of the battery cell 220; on the contrary, the cooling effect of the battery 200 is greatly enhanced by the direct contact of the coolant on the outer surface of the battery cell 220.

Further, in the illustrated embodiment, two battery cells 220 are contained within the case 210, and a heat absorbing mass 230 disposed between the plurality of battery cells 220. The heat absorbing mass 230 serves to absorb heat generated from the battery cells 220.

In a first embodiment of the present invention, the heat absorbing mass 230 includes an absorbent material 236 impregnated with a liquid that vaporizes as it absorbs heat from the battery cells 220, and an exterior material 232 that receives the absorbent material 236 in which the liquid is absorbed and stored. By configuring the heat absorbing mass 230 with the liquid impregnated in the absorbent material 236, the heat absorbing mass 230 can be installed inside the case 210 without concerns for liquid leakage.

To enhance the performance of the heat absorbing mass 230, the liquid-impregnated absorbent material 236 can be configured as a super absorbent matrix including a super absorbent polymer (SAP) or super absorbent fiber (SAF).

The superabsorbent matrix is porous or fibrous and can absorb large amounts of liquid by exhibiting capillary action, while the super absorbent fiber can be manufactured in the form of fibers such as non-woven fabrics by processing super absorbent polymer
The specific types of superabsorbent polymer and superabsorbent fibers made therefrom are not particularly limited in the present invention, but can be used without limitation as long as they have a high capacity for absorbing fluids, particularly water. Examples of superabsorbent polymers used in the present invention include polyacrylic acid, polyacrylate, polyacrylate graft polymers, starch, cross-linked carboxymethylated cellulose, acrylic acid copolymers, hydrolyzed starch-acrylonitrile graft copolymers, and starch-acrylic acid graft copolymers, saponified vinyl acetate-acrylic acid ester copolymer, hydrolyzed acrylonitrile copolymer, hydrolyzed acrylamide copolymer, ethylene-maleic anhydride copolymer, isobutylene-maleic anhydride copolymer, polyvinyl sulfonic acid, polyvinyl phosphonic acid, polyvinyl phosphate, polyvinyl sulfate, Sulfonated polystyrene, polyvinylamine, polydialkylaminoalkyl (metha)acrylamide, polyethyleneimine, polyallylamine, polyallylguanidine, polydimethyldialylammonium hydroxide, quaternized polystyrene derivatives, guanidine-modified polystyrene, quaternized poly(metha)acrylamide, polyvinyl guanidine, and mixtures thereof, and preferably one or more selected from the group consisting of crosslinked polyacrylic acid salts, crosslinked polyacrylic acid, and crosslinked acrylic acid copolymers, but not limited thereto.

The type of acrylic acid copolymer used as a superabsorbent polymer in the present invention is not particularly limited, but may preferably be a copolymer comprising an acrylic acid monomer and one or more co-monomers selected from the group consisting of maleic acid, itaconic acid, acrylamide, 2-acrylamide-2-methylpropanesulfonic acid, 2- (meth)acryloylethanesu lfonic acid, 2-hydroxyethyl (meth)acrylate, and styrenesulfonic acid.

According to the present invention, the amount of water absorbed of superabsorbent polymer is 10 g/g to 500 g/g, preferably 50 g/g to 200 g/g, but is not limited thereto. In other words, it may absorb 10 g to 500 g, preferably 50 g to 200 g, of water per 1 g of the superabsorbent polymer.

In the present invention, a higher amount of absorption of water by the superabsorbent polymer can improve the duration of the cooling effect, but if the amount exceeds 500 g/g, the fluidity of the superabsorbent polymer increases and it is difficult to maintain its shape, thus effective cooling cannot be exerted, and if the amount is less than 10 g/g, the duration of the cooling effect is too short and may be ineffective.

Further, in a first embodiment of the present invention, the exterior material 232 of the heat absorbing mass 230 may be a thermally conductive pouch 232', and the pouch 232' may be provided with a vulnerable portion 234 that preferentially breaks when the liquid impregnated in the absorbent material 236 vaporizes and the internal pressure increases.

The liquid impregnating the absorbent material 236 in large amounts absorbs heat from the battery cell 220 and vaporizes when its temperature exceeds its boiling point. Due to the volume increase caused by the phase change from liquid to gas, the pouch 232' sealing the absorbent material 236 is subjected to pressure.

Here, the pouch 232' is provided with a vulnerable portion 234 that preferentially breaks when the liquid impregnated in the absorbent material 236 vaporizes and the internal pressure increases. The exterior material, the pouch 232', may be manufactured using a flexible laminated sheet.

The laminated sheet may have three or more layers, including an aluminum thin film layer, an inner polymer layer formed on the inner side of the aluminum thin film layer, and an outer polymer layer formed on the outer side of the aluminum thin film layer. For example, the inner polymer layer may be casted polypropylene (CPP) or polypropylene (PP), and the outer polymer layer may be polyethylene terephthalate (PET) or nylon.

The vulnerable portion 234 of the pouch 232' is preferentially broken by an increase in internal pressure due to vaporization of the liquid by locally reducing the seal strength of the pouch 232'. The pouch 232' is sealed by heat welding the edges of the laminate sheet surrounding the absorbent material 236, and the vulnerable portion 234 may be formed in a manner that intentionally makes the heat welding strength lower than the surrounding area. For example, the vulnerable area 234 may be formed by making the thickness less than the surrounding area, by forming notches to reduce strength, or by locally removing a thin layer of aluminum that maintains durability.

By having a vulnerable portion 234 in the pouch 232', when the battery cell 220 overheats due to a thermal runaway phenomenon, the liquid impregnated with the absorbent material 236 in the pouch 232' absorbs heat and evaporates, and when the internal pressure of the vaporized gas rises above a certain pressure, the vulnerable portion 234 in the pouch 232' breaks and emits gas. The gas ejected from the heat absorbing mass 230 significantly reduces the risk of fire by cooling the flammable gas emitted from the overheated battery cell 220 and the ignition source such as the heating electrode and suppressing the flame.

In one embodiment of the present invention, the liquid impregnating the absorbent material 236 may be water. Water has the largest specific and latent heat of any readily available liquid. Therefore, water impregnated in the absorbent material 236 is suitable for application in the heat absorbing mass 230 because of the large amount of heat absorbed by the water during its phase change to a gas, even before it is vaporized.

As such, when the pouch 232' is equipped with a vulnerable area 234, it can provide rapid cooling and even extinguishing effects in an emergency situation where high temperatures persist. However, once the heat absorbing mass 230 fractures and the accumulated gas is released at once, the heat absorbing mass 230 loses much of its function. Therefore, it is preferable for the safety of the battery 200 and the battery pack 10 that the heat absorption function of the heat absorbing mass 230 is maintained for as long as possible.

For this purpose, the battery pack 10 of the present invention can be configured to melt the plug 340 that closes the supply passage 330 between the heat sink 300 and the liquid inlet 212 before the vulnerable portion 234 of the pouch 232' breaks. For example, if the liquid inside the heat absorbing mass 230 is water, the plug 340 can be designed to melt at a temperature of about 90 to 100 degrees Celsius before the water fully boils, allowing the coolant in the heat sink 300 to cool the pouch 232'.

The cooling of the pouch 232' delays the boiling of the liquid, and thus delays the time before the heat absorbing mass 230 is broken and loses its functionality. In other words, the coolant in the heat sink 300 cools the battery cell 220, which can no longer control its thermal runaway, while simultaneously cooling the heat absorbing mass 230, and thus effectively delays the catastrophic failure of the battery cell 220.

For immediate cooling of the battery cells 220 and the heat absorbing mass 230 disposed therebetween, the liquid inlet 212 provided in the case 210 can be arranged to be open toward the heat absorbing mass 230. Further, blocking heat transfer between the plurality of batteries 200 by disposing an insulation material 400, such as mica, between the plurality of batteries 200 may be advantageous for preventing a thermal runaway from propagating and spreading to the surroundings, a phenomenon known as heat spreading. Additionally, the bottom surface of the pack case 100 may be provided with a cooling pad 410 similar to the heat sink 300 to enhance cooling of the batteries 200.

### [Second embodiment]

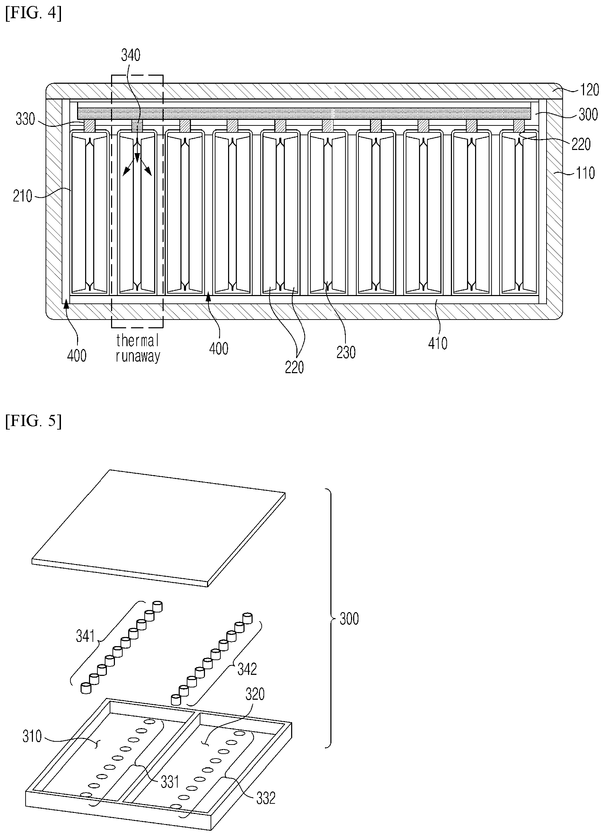

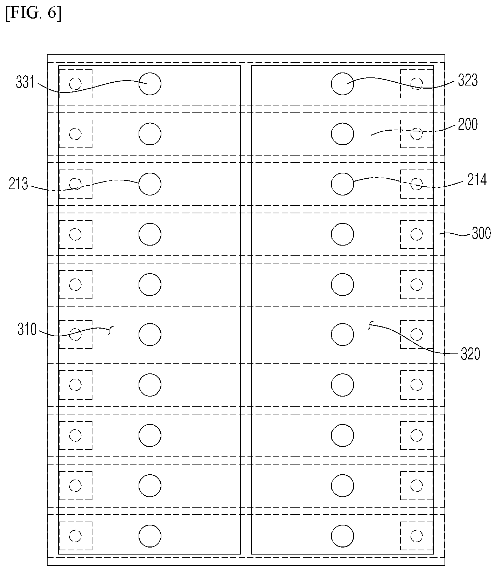

FIG. 5 is a diagram of a heat sink 300 provided in a battery pack 10 according to a second embodiment of the present invention, and FIG. 6 is a diagram of a combined structure of the heat sink 300 of FIG. 5 and the battery 200.

A second embodiment of the present invention differs from the first embodiment described above in the configuration of the heat sink 300, the supply passage 330, and the plug 340. In the following, the characteristic configurations of the second embodiment will be described, and configurations that overlap with the first embodiment will not be described in detail.

In the second embodiment of the present invention, the heat sink 300 includes a first block 310 and a second block 320 that are independent from each other. In other words, the interior of the heat sink 300 is divided into two separate areas. In addition, a plurality of supply passages 330 connected to the interior of the battery 200 include a first supply passage 331 connecting the first block 310 and the plurality of batteries 200, respectively, and a second supply passage 332 connecting the second block 320 and the plurality of batteries 200, respectively.

Further, the plurality of plugs 340 includes a first plug 341 sealing the first supply passage 331 and a second plug 342 sealing the second supply passage 332, respectively, and the melting point of the first plug 341 and the melting point of the second plug 342 are different.

Here, the liquids contained in the first block 310 and the second block 320 of the heat sink 300 may be different. For example, in the same manner as the first embodiment described above, the liquid contained in the first block 310 is water, and the melting point of the first plug 341 is lower than the melting point of the second plug 342. In addition, the first plug 341 is melted before the vulnerable portion 234 of the pouch 232' is broken. Accordingly, the water discharged from the first block 310 by the melting of the first plug 341 cools the pouch 232', thereby extending the operation of the heat absorbing mass 230.

On contrary, the liquid contained in the second block 320 is water mixed with an additive, which may be a substance that lowers the surface tension of the water, or may be a fire extinguishing agent. Such additives are intended to enhance the extinguishing capabilities of the water. Substances that reduce the surface tension of the water include wetting agents and surfactants, and when the surface tension of the water is reduced, the penetration effect of the water is increased, thereby enhancing the extinguishing effect on ignition sources such as heating electrodes or ignition particles.

Extinguishing agents are agents that extinguish fire by themselves, and can include a variety of commercially available powders and liquid extinguishing liquids, etc. For example, an extinguishing agent of the product name F-500 EA (manufacturer: HAZARD CONTROL TECHNOLOGIES, INC.) may be added to water.

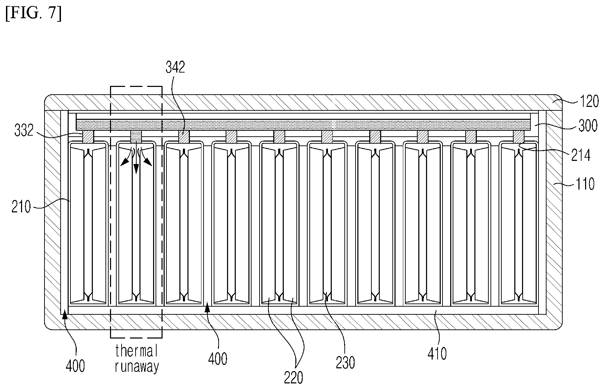

FIG. 7 is a drawing illustrating a state in which the second plug 342 is melted, and liquid stored in the heat sink 300 is injected into the battery 200. The melting point of the second plug 342 is higher than the first plug 341, and in particular, it may be preferable for the second plug 342 to melt after the vulnerable portion 234 of the pouch 232' is broken. For example, the second plug 342 may be made of a material that melts at the temperature of the superheated steam that is generated inside the heat absorbing mass 230 and then emitted when the vulnerable portion 234 fractures.

A situation in which the vulnerable portion 234 of the heat absorbing mass 230 breaks is a situation in which the heat absorbing mass 230 can no longer be cooled by the water supplied by the first block 310, and a high temperature atmosphere persists in which the vapor pressure inside the heat absorbing mass 230 reaches a limit, and the battery cell 220 can combust or explode in such a high temperature atmosphere.

Therefore, in order to respond to such an emergency situation, the second embodiment of the present invention is configured to store water mixed with additives in the second block 320, and the second plug 342 is configured to melt after the vulnerable portion 234 of the pouch 232' is broken, so as to extinguish a fire that may occur after the loss of function of the heat absorbing mass 230.

Further, similar to the first embodiment, the main liquid inlet 212 of the battery 200 includes a first liquid inlet 213 connected to the first supply passage 331 and a second liquid inlet 214 connected to the second supply passage 332, and the first liquid inlet 213 is open toward the heat absorbing mass 230 to immediately cool the heat absorbing mass 230. It is relatively unnecessary for the second liquid inlet 214 to be open toward the heat absorbing mass 230, and it may be preferable for the second liquid inlet 214 to be open toward the battery cell 220 for effective digestion.

### [Description of Reference Numerals]

| | | | |
|---|---|---|---|
| 10: | battery pack | 100: | pack case |
| 110: | main case | 120: | top case |
| 130: | side case | 200: | battery |
| 210: | case | 212: | liquid inlet |
| 213: | first liquid inlet | 214: | second liquid inlet |
| 220: | battery cell | 230: | heat absorbing mass |
| 232: | exterior material | 232': | pouch |
| 234: | vulnerable portion | 236: | absorbent material |
| 300: | heat sink | 310: | first block |
| 320: | second block | 330: | supply passage |
| 331: | first supply passage | 332: | second supply passage |
| 340: | plug | 341: | first plug |
| 342: | second plug | 400: | insulation material |
| 410: | cooling pad | | |

## Claims

1. A battery pack (10) comprising:
a pack case (100);
a plurality of batteries (200) contained within the pack case (100);
a heat sink (300) positioned above the plurality of batteries in which coolant is stored;
a plurality of supply passages (330) connecting the heat sink (300) and the plurality of batteries (200), respectively;
wherein the plurality of supply passages (330) is sealed, respectively, by a plurality of plugs (340) which are melted by heat generated in the case of thermal runaway of the batteries (200), and
**characterised in that** each of the plurality of batteries (200) includes:
a case (210) made of metal material and provided with a liquid inlet (212) connecting with one of the plurality of supply passages (330);
a plurality of battery cells (220) contained within the case (210); and
a heat absorbing mass (230) disposed between the plurality of battery cells (220).

2. The battery pack of claim 1, wherein the heat absorbing mass (230) includes an absorbent material (236) impregnated with a liquid that vaporizes as it absorbs heat generated from the battery cells (220); and
an exterior material (232) containing the absorbent material (236).

3. The battery pack of claim 2, wherein the exterior material (232) is a thermally conductive pouch.

4. The battery pack of claim 3, wherein the pouch (232') is provided with a vulnerable portion (234) that is broken when an internal pressure of the pouch increases.

5. The battery pack of claim 4, wherein the absorbent material (236) is a super absorbent matrix including super absorbent polymers (SAP) or super absorbent fibers (SAF).

6. The battery pack of claim 4, wherein the plurality of plugs (340) is melted before the vulnerable portion of the pouch is broken.

7. The battery pack of claim 6, wherein the liquid inlet (212) is open toward the heat absorbing mass (230).

8. The battery pack of claim 1, wherein an insulation material is disposed between the plurality of batteries (200).

9. The battery pack of claim 4, wherein the heat sink (300) includes a first block (310) and a second block (320) separated from each other,
wherein the plurality of supply passages includes a first plurality of supply passages (331) connecting the first block and the plurality of batterie (200)s, respectively, and a second plurality of supply passages (332) connecting the second block and the plurality of batteries (200), respectively,
wherein the plurality of plugs includes a first plurality of plugs (341) sealing the first plurality of supply passages, respectively, and a second plurality of plugs (342) sealing the second plurality of supply passages, respectively, and the melting point of the first plurality of plugs and the melting point of the second plurality of plugs are different.

10. The battery pack of claim 9, wherein the liquid stored in the first block (310) is water, and the melting point of the first plurality of plugs (341) is lower than the melting point of the second plurality of plugs (342).

11. The battery pack of claim 9, wherein the first plurality of plugs (341) is melted before the vulnerable portion (234) of the pouch is broken.

12. The battery pack of claim 9, wherein the liquid stored in the second block (320) is water mixed with a substance that reduces the surface tension of the water, or a fire extinguishing agent.

13. The battery pack of claim 12, wherein the second plurality of plugs (342) is melted after the vulnerable portion (234) of the pouch is broken.

14. The battery pack of claim 9, wherein the liquid inlet includes a first liquid inlet (213) connected to the first plurality of supply passages (331) and a second liquid inlet (214) connected to the second plurality of supply passages (332), and the first liquid inlet is open toward the heat absorbing mass (230).

## Patentansprüche

1. Batteriepack (10), umfassend:
ein Packgehäuse (100);
eine Mehrzahl von Batterien (200), welche innerhalb des Packgehäuses (100) enthalten sind;
einen oberhalb der Mehrzahl von Batterien positionierten Kühlkörper (300), in welchem Kühlmittel gespeichert ist;
eine Mehrzahl von Zufuhrdurchlässen (330), welche jeweils den Kühlkörper (300) und die Mehrzahl von Batterien (200) verbinden;
wobei die Mehrzahl von Zufuhrdurchlässen (330) jeweils durch eine Mehrzahl von Stopfen (340) abgedichtet ist, welche durch in dem Fall eines thermischen Durchgehens der Batterien (200) erzeugte Wärme geschmolzen werden, und
**dadurch gekennzeichnet, dass** jede der Mehrzahl von Batterien (200) umfasst:
ein Gehäuse (210), welches aus einem Metallmaterial hergestellt ist und mit einem Flüssigkeitseinlass (212) bereitgestellt ist, welcher mit einem der Mehrzahl von Zufuhrdurchlässen (330) verbunden ist;
eine Mehrzahl von Batteriezellen (220), welche innerhalb des Gehäuses (210) enthalten sind; und
eine wärmeabsorbierende Masse (230), welche zwischen der Mehrzahl von Batteriezellen (220) angeordnet ist.

2. Batteriepack nach Anspruch 1, wobei die wärmeabsorbierende Masse (230) ein absorbierendes Material (236) umfasst, welches mit einer Flüssigkeit imprägniert ist, welche verdampft, wenn sie von den Batteriezellen (220) erzeugte Wärme absorbiert; und
ein Außenmaterial (232), welches das absorbierende Material (236) enthält.

3. Batteriepack nach Anspruch 2, wobei das Außenmaterial (232) ein thermisch leitfähiger Beutel ist.

4. Batteriepack nach Anspruch 3, wobei der Beutel (232') mit einem anfälligen Abschnitt (234) bereitgestellt ist, welcher bricht, wenn ein Innendruck des Beutels ansteigt.

5. Batteriepack nach Anspruch 4, wobei das absorbierende Material (236) eine superabsorbierende Matrix ist, welche superabsorbierende Polymere (SAP) oder superabsorbierende Fasern (SAF) umfasst.

6. Batteriepack nach Anspruch 4, wobei die Mehrzahl von Stopfen (340) geschmolzen wird, bevor der anfällige Abschnitt des Beutels bricht.

7. Batteriepack nach Anspruch 6, wobei der Flüssigkeitseinlass (212) in Richtung der wärmeabsorbierenden Masse (230) offen ist.

8. Batteriepack nach Anspruch 1, wobei ein Isoliermaterial zwischen der Mehrzahl von Batterien (200) angeordnet ist.

9. Batteriepack nach Anspruch 4, wobei der Kühlkörper (300) einen ersten Block (310) und einen zweiten Block (320) umfasst, welche voneinander getrennt sind,
wobei die Mehrzahl von Zufuhrdurchlässen eine erste Mehrzahl von Zufuhrdurchlässen (331), welche jeweils den ersten Block und die Mehrzahl von Batterien (200) verbinden, und eine zweite Mehrzahl von Zufuhrdurchlässen (332) umfasst, welche jeweils den zweiten Block und die Mehrzahl von Batterien (200) verbinden,
wobei die Mehrzahl von Stopfen eine erste Mehrzahl von Stopfen (341), welche jeweils die erste Mehrzahl von Zufuhrdurchlässen abdichten, und eine zweite Mehrzahl von Stopfen (342) umfasst, welche jeweils die zweite Mehrzahl von Zufuhrdurchlässen abdichten, und wobei der Schmelzpunkt der ersten Mehrzahl von Stopfen und der Schmelzpunkt der zweiten Mehrzahl von Stopfen verschieden sind.

10. Batteriepack nach Anspruch 9, wobei die in dem ersten Block (310) gespeicherte Flüssigkeit Wasser ist und wobei der Schmelzpunkt der ersten Mehrzahl von Stopfen (341) niedriger ist als der Schmelzpunkt der zweiten Mehrzahl von Stopfen (342).

11. Batteriepack nach Anspruch 9, wobei die erste Mehrzahl von Stopfen (341) geschmolzen wird, bevor der anfällige Abschnitt (234) des Beutels bricht.

12. Batteriepack nach Anspruch 9, wobei die in dem zweiten Block (320) gespeicherte Flüssigkeit Wasser ist, welches mit einer Substanz gemischt ist, welche die Oberflächenspannung des Wassers verringert, oder ein Feuerlöschmittel ist.

13. Batteriepack nach Anspruch 12, wobei die zweite Mehrzahl von Stopfen (342) geschmolzen wird, nachdem der anfällige Abschnitt (234) des Beutels gebrochen ist.

14. Batteriepack nach Anspruch 9, wobei der Flüssigkeitseinlass einen ersten Flüssigkeitseinlass (213), welcher mit der ersten Mehrzahl von Zufuhrdurchlässen (331) verbunden ist, und einen zweiten Flüssigkeitseinlass (214) umfasst, welcher mit der zweiten Mehrzahl von Zufuhrdurchlässen (332) verbunden ist, und wobei der erste Flüssigkeitseinlass in Richtung der wärmeabsorbierenden Masse (230) offen ist.

## Revendications

1. Bloc-batterie (10) comprenant :
un boîtier de bloc (100) ;
une pluralité de batteries (200) contenues dans le boîtier de bloc (100) ;
un dissipateur thermique (300) positionné au-dessus de la pluralité de batteries dans lequel du réfrigérant est stocké ;
une pluralité de passages d'alimentation (330) reliant le dissipateur thermique (300) et la pluralité de batteries (200), respectivement ;
dans lequel la pluralité de passages d'alimentation (330) est scellée, respectivement, par une pluralité de bouchons (340) qui fondent par la chaleur générée dans le cas d'un emballement thermique des batteries (200), et
**caractérisé en ce que** chacune de la pluralité de batteries (200) comporte :
un boîtier (210) constitué d'un matériau métallique et pourvu d'une entrée de liquide (212) reliée à l'un de la pluralité de passages d'alimentation (330) ;
une pluralité de cellules de batterie (220) contenues dans le boîtier (210) ; et
une masse absorbant la chaleur (230) disposée entre la pluralité de cellules de batterie (220).

2. Bloc-batterie selon la revendication 1, dans lequel la masse absorbant la chaleur (230) comporte un matériau absorbant (236) imprégné d'un liquide qui se vaporise lorsqu'il absorbe la chaleur générée par les cellules de batterie (220) ; et
un matériau extérieur (232) contenant le matériau absorbant (236).

3. Bloc-batterie selon la revendication 2, dans lequel le matériau extérieur (232) est une poche thermoconductrice.

4. Bloc-batterie selon la revendication 3, dans lequel la poche (232') est pourvue d'une partie vulnérable (234) qui se brise lorsqu'une pression interne de la poche augmente.

5. Bloc-batterie selon la revendication 4, dans lequel le matériau absorbant (236) est une matrice superabsorbante comprenant des polymères superabsorbants (SAP) ou des fibres superabsorbantes (SAF).

6. Bloc-batterie selon la revendication 4, dans lequel la pluralité de bouchons (340) fond avant que la partie vulnérable de la poche ne se brise.

7. Bloc-batterie selon la revendication 6, dans lequel l'entrée de liquide (212) est ouverte vers la masse absorbant la chaleur (230).

8. Bloc-batterie selon la revendication 1, dans lequel un matériau d'isolation est disposé entre la pluralité de batteries (200).

9. Bloc-batterie selon la revendication 4, dans lequel le dissipateur thermique (300) comporte un premier bloc (310) et un deuxième bloc (320) séparés l'un de l'autre, dans lequel la pluralité de passages d'alimentation comprend une première pluralité de passages d'alimentation (331) reliant le premier bloc et la pluralité de batteries (200), respectivement, et une deuxième pluralité de passages d'alimentation (332) reliant le deuxième bloc et la pluralité de batteries (200), respectivement,
dans lequel la pluralité de bouchons comprend une première pluralité de bouchons (341) scellant la première pluralité de passages d'alimentation, respectivement, et une deuxième pluralité de bouchons (342) scellant la deuxième pluralité de passages d'alimentation, respectivement, et le point de fusion de la première pluralité de bouchons et le point de fusion de la deuxième pluralité de bouchons sont différents.

10. Bloc-batterie selon la revendication 9, dans lequel le liquide stocké dans le premier bloc (310) est de l'eau, et le point de fusion de la première pluralité de bouchons (341) est inférieur au point de fusion de la deuxième pluralité de bouchons (342).

11. Bloc-batterie selon la revendication 9, dans lequel la première pluralité de bouchons (341) fond avant que la partie vulnérable (234) de la poche ne se brise.

12. Bloc-batterie selon la revendication 9, dans lequel le liquide stocké dans le deuxième bloc (320) est de l'eau mélangée à une substance qui réduit la tension superficielle de l'eau, ou un agent extincteur.

13. Bloc-batterie selon la revendication 12, dans lequel la deuxième pluralité de bouchons (342) fond après que la partie vulnérable (234) de la poche s'est brisée.

14. Bloc-batterie selon la revendication 9, dans lequel l'entrée de liquide comprend une première entrée de liquide (213) reliée à la première pluralité de passages d'alimentation (331) et une deuxième entrée de liquide (214) reliée à la deuxième pluralité de passages d'alimentation (332), et la première entrée de liquide est ouverte vers la masse absorbant la chaleur (230).
